# EUROPEAN PATENT APPLICATION

(11) **EP 1 939 487 A1**
(43) Date of publication of application: **02.07.2008**
(21) Application number: 06026939.6
(22) Date of filing: 27.12.2006
(51) Int. Cl.: F16G 5/16, G01M 13/02

(54) **Method and device for monitoring the quality of transverse elements in a drive belt manufacturing process**

(71) Applicant: ROBERT BOSCH GMBH, 70442 Stuttgart (DE)
(72) Inventor: Smeets, Antonius Andreas Maria, 2900 Schoten (BE)
(74) Representative: Plevier, Gabriel Anton Johan Maria

(57) **Abstract**

The invention provides for a method for monitoring the quality of a transverse element (32) produced in or for a drive belt (3) manufacturing process, which method comprises the steps of:
- generating a substantially planar beam of light (I), travelling in a direction away from a source (10) thereof towards the element (32) thus illuminating a part of a respective main face (40; 41) of the element (32),
- detecting the reflection (R-I) of the light beam (I) from the said respective main face (40; 41), and
- relating the quality of the transverse element (32) to the intensity, shape or other property of the said reflection (R-I).

## Description

The present invention relates to a method for monitoring the quality in a drive belt manufacturing process, in particular of the transverse element components thereof. Such a drive belt is predominantly used as a means for power transmission between two adjustable pulleys of the well-known continuously variable transmission that is mainly applied in motor vehicles. The invention further relates to a device for carrying out such method.

Several types of drive belt are generally known, one example whereof is described in the European patent publication EP-A-1 554 507 and is composed of a multitude of relatively thin transverse metal elements that are slideably incorporated on two laminated endless tensile means that are each composed of a set of mutually nested flat metal rings, alternatively denoted bands. The rings are normally made from a Maraging steel that combines a/o the properties of great tensile strength and good resistance against tensile stress and bending fatigue. The transverse elements are normally cut, e.g. by blanking, from a strip or plate of basic carbon steel such as 75Cr1. Usually several further process steps are applied to improve the surface quality and material hardness of the elements such as stone tumbling and/or shot-peening, i.e. to remove burrs and/or increase surface hardness, and quench hardening.

These known transverse elements include a relatively wide bottom part, a relatively wide top part and a comparatively thin, essentially oblong pillar part that interconnects the top and bottom parts. Hereby, the overall, general outline of the bottom part is typically shaped trapezoidally, whereas the top part is typically shaped more or less triangularly, usually, however, with substantially rounded corners. Further, the known transverse elements are each provided with a stud projecting essentially perpendicular to a first main face of a respective element, which stud is typically provided in the said top part with an essentially cylindrical, or frusto-conical shape. In an opposite, i.e. reversely oriented main face of the elements there is provided a complementary hole, such that in the drive belt the stud of a succeeding element is, or at least can be, accommodated in the hole of a respectively preceding element. By this well known measure, adjoining elements in the drive belt are positioned relatively to one another, which is known to have a favourable effect on the overall functioning of the drive belt.

The drive belt application thereof posses very stringent quality requirements on the transverse elements, in particular in terms of their dimensional accuracy that also needs to be highly uniform between the individually produced elements.

A first problem that typically occurs at transverse element production is linked to the said hole provided in a main face thereof. In particular the depth of the hole needs to satisfy a strict requirement so that it can receive the said stud completely, without an undue weakening of the element's structural strength. The currently available, commercially viable production processes struggle to continually fulfil such strict requirement. Moreover, in the typical production environment, contaminations such as metal particles can be captured by the hole, which could potentially compromise the desired quality of the drive belt. Therefore, the depth and cleanness of the hole is preferably monitored as part of the drive belt manufacturing process and transverse elements that do not conform to a certain tolerance level in this respect are rejected for belt assembly.

A second problem that typically occurs at transverse element production is that the overall flatness of the transverse elements, i.e. of the main faces thereof, which is a very important criterion for the quality and performance of the end product drive belt, is difficult to maintain in the various steps in the production process. That is to say, the flatness of the transverse elements may be easily compromised by a torsion, i.e. twisting, of its pillar part, whereby the bottom part of a respective element is rotated slightly relative to its top part. Therefore, such pillar torsion of the transverse elements is preferably monitored in production and elements that do not conform to, in casu exceed, a certain tolerance level in this respect are rejected for belt assembly.

It is remarked that in this latter case, i.e. specifically for inspecting the transverse elements with regard to pillar torsion, a conventional means is provided by the Japanese patent application with publication No. 2001/129485. The known pillar torsion inspection means include a slit provided with at least one dimension that is defined such that it is able to narrowly receive the nominal thickness of the transverse elements. Any element that does not conform to the flatness criterion does not fit through such slit and can thus be easily separated from the correctly produced elements and rejected for belt assembly. Of course the above selection method may work adequately per se. It comes, however, with the disadvantage that when the elements are pushed through the slit they are prone to damage in the form of scratches, dents and/or bulges. Especially when the transverse element just about fits through the slit, i.e. just about satisfies the criterion set for the maximally allowed, i.e. tolerance level for pillar torsion, there is the risk of it becoming stuck, i.e. wedged in the slit, so that considerable force needs to be applied to dislodge the element. Moreover, the known inspection means need to be adapted to -the thickness of- each separate transverse element design and is thus not universally applicable.

It is an object of the present invention to provide for a method for inspecting the transverse elements, in particular the hole and pillar parts thereof, which method may be applied to remove from the drive belt production process the transverse elements that do not satisfy a predefined quality criterion in these respects. More in particular it is aimed to provide for a method that can be performed automatically and that, as such, can favourably realise a rapid and reliable quality control. Preferably, such method is set-up in such a manner that the risk of the transverse elements being damaged thereby is negligible.

According to the present invention the above object is realised in general with the method of the following claim 1. Because in this new method optical means are employed, the transverse elements can not be damaged by the actual inspection itself. Moreover, such method is highly suited to be performed in an automated process, providing accurate results very fast and at relatively little labour cost. The method according to claim 1 can be used to automatically reject any element that does satisfy one or more predefined quality and/or design criteria from the drive belt. Also in accordance with the present invention, this general method can be refined specifically for inspecting the elements in terms of the cleanness and of the depth of the hole and of pillar torsion.

The invention will now be elucidated further with reference to the figures enclosed.
Figure 1 is a schematic representation in a perspective view of a known continuously variable transmission provided with a drive belt and two pulleys.
Figure 2 is a cross section of the known drive belt oriented in the longitudinal direction thereof.
Figure 3 is a simplified side elevation of two transverse elements of the known drive belt, which figuratively illustrates a problem associated with an insufficient depth of the hole thereof.
Figure 4 is a simplified top view of two transverse elements of the known drive belt, which figuratively illustrates a problem associated with the phenomenon of pillar torsion.
Figure 5 illustrates the method according to the invention in a possible set-up of a device capable of carrying out the method according to the present invention.
Figure 6 illustrates a first refinement of the method according to the invention.
Figures 7 and 8 illustrate a second refinement of the method according to the invention along a side elevation (fig. 7) and a front elevation (fig. 8) of the transverse element.
Figure 9 illustrates a third refinement of the method according to the invention.
Figure 10 shows an image of the transverse element recorded in the course of carrying out the method according to the invention in accordance with the said third refinement thereof.

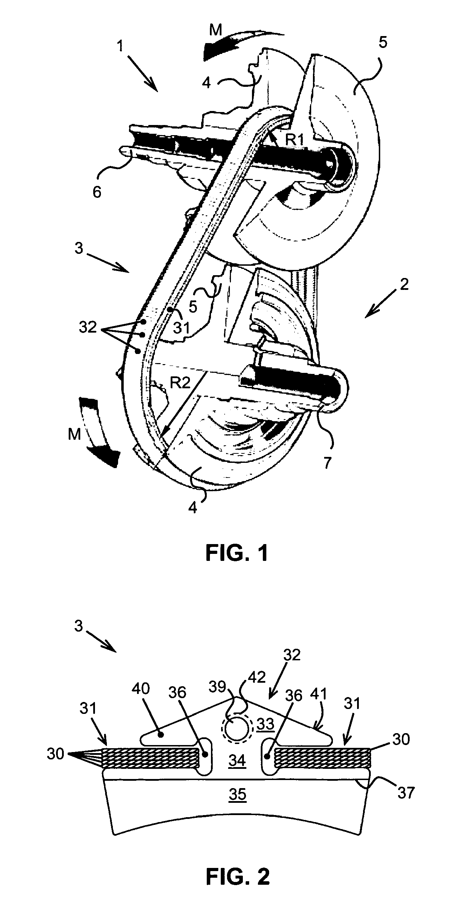

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a so-called pushbelt-type drive belt 3 is present for transmitting a rotational movement M and an accompanying torque from one pulley 1, 2 to the other 2, 1. The pulley discs 4, 5 are shaped generally conical and at least one pulley disc 4 is incorporated in the transmission axially moveable along a respective pulley shaft 6, 7 on which both discs 4, 5 are placed. The transmission normally also comprises activation means that impose on the said at least one movable disc 4 an axially oriented clamping force directed towards the respective other pulley disc 5 such that the drive belt 3 is clamped there between.

The drive belt 3 comprises an endless tensile means 31 and a multitude of relatively thin transverse elements 32 that are provided on the tensile means 31 movable along the longitudinal direction thereof and oriented predominantly transversely thereto. The elements 32 take-up the said clamping force, such that at rotation of a driving pulley 1, friction between the discs 4, 5 and the drive belt 3, causes the elements 32 to be thrust in the said direction of movement M from the said driving pulley 1 to a driven pulley 2 and back again, thereby being guided and supported by the tensile means 31. A geometric transmission ratio of the transmission is determined by the quotient of an effective contact radius R2 of the drive belt 3 at the driven pulley 2 and an effective contact radius R1 of the drive belt 3 at the driving pulley 1, which may be varied continuously in range of values.

Figure 2 provides a cross section of the known drive belt 3, which cross section is oriented in the longitudinal direction thereof. In figure 2 the transverse element component 32 of the drive belt 3 is shown in front elevation. The element 32 comprises three main parts, namely a relatively wide and essentially arrowhead-shaped top part 33, a relatively wide and essentially trapezoidal bottom part 35 and an essentially oblong pillar part 34 of relatively limited width that interconnects the top and bottom parts 33, 35.

The transverse elements 32 are incorporated in the drive belt 3 mounted on the endless tensile means 31 thereof, which consists of two laminated parts, each part being formed by a number of thin and flat metal rings 30 that are nested one around the other in the radial direction and each part being accommodated in a respective opening or recess 36 in the transverse element 32, one recess 36 provided on either side of the pillar part 34 between the element's top and bottom parts 33, 35.

Further, an longitudinally protruding stud 39 is provided on a front main face 40 of the transverse element 32, which stud 39 is to be accommodated in a hole 42 provided in a rear main face 41 of an adjacent transverse element 32. The stud 39 and hole 42 are provided to mutually align adjacent transverse elements 32 of the drive belt 3 transversely to its longitudinal direction during operation in the transmission. At the bottom part 35 of the transverse elements 32 below a so-called tilting edge 36 its thickness tapers-off at least effectively, so as to allow adjacent elements 32 to mutually tilt about the axially oriented tilting edge 32 when clamped between the discs 4, 5 of the pulleys 1, 2.

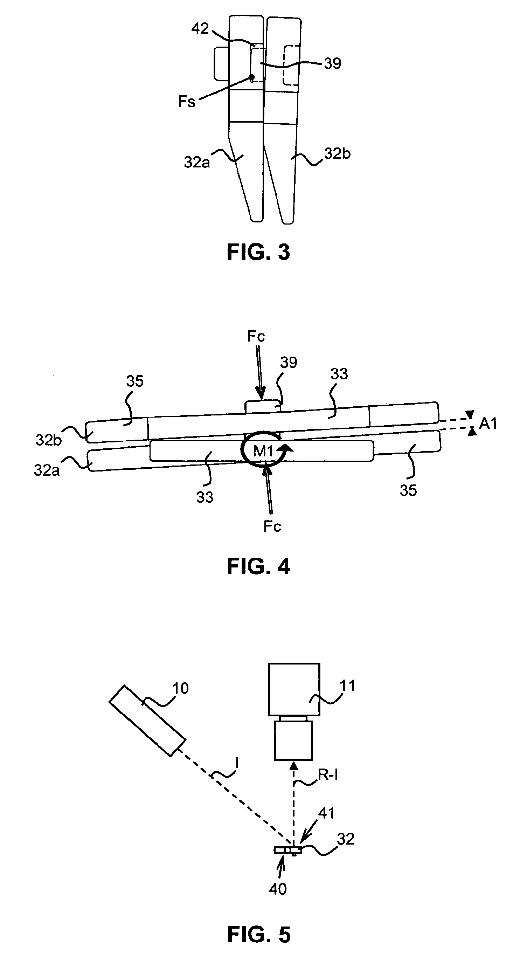

A first problem that may occur when producing transverse elements 32 of the present type is that the hole 42 may be too shallow for fully accommodating the stud 39, as is illustrated in figure 3. Such an insufficient depth of the hole 42 may be caused by a deviation in the production process or simply by a foreign particle being present therein.

Figure 3 provides a side elevation of two adjacent transverse elements 32a, 32b such as they may be applied in the drive belt 3, however, whereby the hole 42 of the preceding element 32a is too shallow to receive the complete stud 39 of the other, succeeding element 32b. It may be evident that a contact force Fs between the transverse elements 32a, 32b is thus disadvantageously concentrated at the said stud 39, which typically at least adds to the noise emitted during operation in the transmission, but that can also cause the transverse element to break. Moreover, in between the pulleys 1, 2, the said elements 32a, 32b will be slightly tilted relative to one another, which typically results in an unfavourable additional loading of the endless tensile means 31.

A second problem that may occur when producing transverse elements 32 of the present type is related to their specific design, which includes relatively wide top and bottom parts 33, 35, whereas the interconnecting pillar part 34 is of relatively limited width. Because of this particular design the flatness of the transverse elements 32, which is a very important criterion for the quality and performance of the end product drive belt 3, is difficult to maintain in the various steps in the production process. That is to say, the flatness of the transverse elements may be easily compromised by a torsion, i.e. twisting, of its pillar part 34, whereby the bottom part 35 of a respective element 32 is rotated slightly relative to its top part 33, as is illustrated in figure 4.

Figure 4 provides a top view of two adjacent transverse elements 32a, 32b such as they may be applied in the drive belt 3, the lowermost one 32a whereof suffers from the above-described phenomenon of pillar torsion. During operation in the drive belt 3, the transverse elements 32a and 32b subjected to a compressive load that is indicated in figure 3 as the force arrows Fc and that presses the elements 32a, 32b firmly against one another. Hereby, a distance A1 in the peripheral direction between the respective bottom parts 33 thereof, which exists in an unloaded condition when the magnitude of the pillar torsion is not the same for both adjacent elements 32a, 32b, is reduced to zero. For example in the illustrated case, a rotation M1 is applied to the head part 35 of the lowermost transverse element 32a as a consequence, whereby in particular the pillar part 34 is subjected to additional and moreover cyclically variable, i.e. fatigue stresses. These stresses may result in a premature failing, i.e. breaking of the transverse element 32a, thereby adversely affecting the service life of the drive belt 3 as a whole.

Accordingly, for realising an optimum quality of the drive belt 3 end-product, the depth and cleanness of the hole 42, as well as the amount of pillar torsion are preferably monitored in the production process, whereby any transverse element 32 exceeding a certain tolerance level in this respect is rejected from the assembly process of the drive belt 3.

The present invention provides for a method for identifying such deficient transverse elements 32, which is illustrated along figure 5 and which at least comprises the steps of generating a substantially planar beam of light I travelling in a direction away from a source 10 thereof towards the element 32, thus illuminating a part of a respective main face 40, 41 of the element 32, of detecting the reflection R-I of the light beam I from the said respective main face 40, 41, and of relating the quality of the transverse element 32 to the intensity, shape or other property of the said reflection R-I. If the said quality does not satisfy a predefined criterion, the respective transverse element 32 may then be rejected from the drive belt 3 manufacturing process, or be selected or marked for rework.

Preferably, a laser 10 is used to generate the beam of light I, possibly placed behind a mask with one or more rectangular openings or slots, such that the laser light is provided with a well defined planar beam shape with a minimum of scattering between the laser 10 and the illuminated object, i.e. the element 32. Preferably also, a camera 11 is used to detect the reflection R-I of the light beam I of the transverse element 32, e.g. by recording a digital image that can be automatically analysed in terms of the intensity, shape or other property of the said reflection R-I by comparing it with the relevant predefined criterion, for example by using an appropriately programmed general purpose computer.

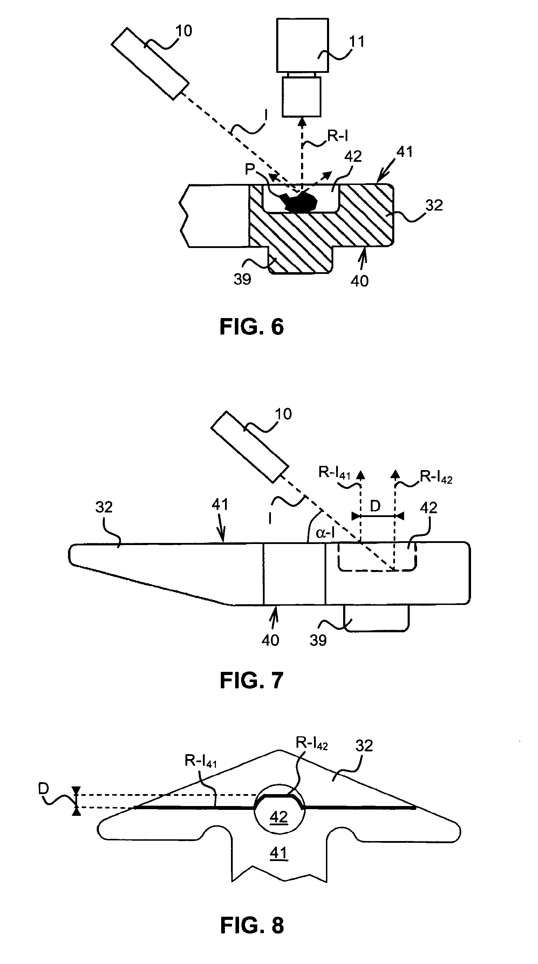

A first refinement of the above method according to the invention is specifically adapted to monitor the cleanness of the hole 42. In this case, as is illustrated in figure 6, the light beam I illuminates a part of the main face 41 of the transverse element 32 (shown here in a cross-section of its top part 33) that includes the hole 42. If the detected reflection R-I of the light beam I from the location of the hole 42 is distorted, i.e. non rectangular, or has too little intensity, it may be assumed that the respective hole 42 is contaminated, i.e. that a foreign particle P is present therein. In practice virtually every foreign particle P can be detected in this manner, because the reflective properties thereof will differ considerably from that of a smooth metal surface, which is supposed to form the bottom of the hole 42.

A second refinement of the above method according to the invention is specifically adapted to monitor the depth of the hole 42. In this case, as is illustrated in figure 7, the light beam I illuminates a part of the main face 41 of the transverse element 32 (shown here in a side elevation) that includes the hole 42, while oriented at an acute angle α-I with the respectively illuminated part of the said main face 41. By measuring a perpendicular distance D between the reflection R-I₄₂ of the light beam I at the location of the hole 42 and the reflection R-I₄₁ of the light beam I at a position on the said main face 41, as shown in figure 8 in a front elevation of the element 32, the depth of the hole 41 can be readily calculated as the tangent of the said angle α-I multiplied by the said distance D.

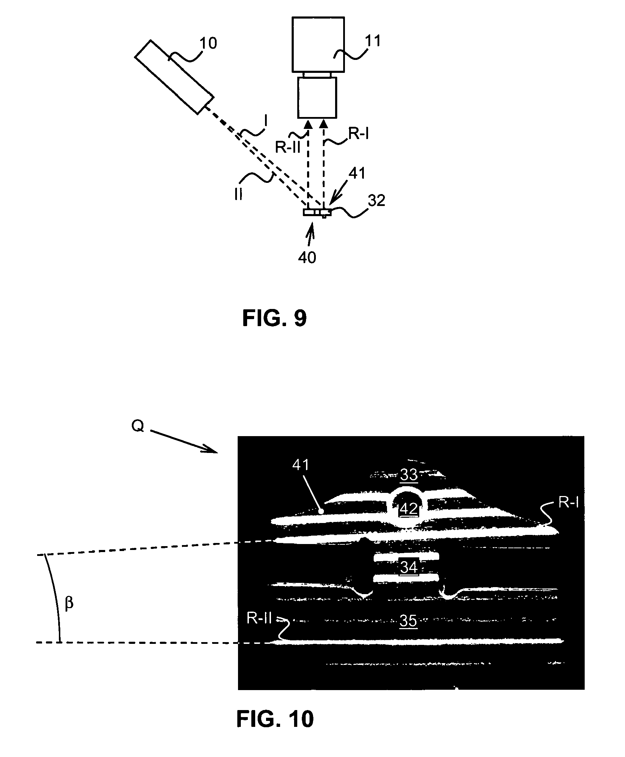

Finally, a third refinement of the above method according to the invention is specifically adapted to monitor the amount of pillar torsion, which third refinement is illustrated in figure 9. In this case two substantially planar beams of light I and II are generated, whereof one light beam I illuminates a respective main face 41 of the element 32 at a location in the top part 33 thereof and whereof the other light beam II illuminates the respective main face 41 in the bottom part 35 of the element 32, whereby the said light beams I, II are oriented at an acute angle of incidence relative to the respective main face 41.

Figure 10 represents an actual photographic image of a thus illuminated respective main face 41 of a transverse element 32, wherein an angle β is observed between the long axes of the oblong reflections R-I and R-II of the said light beams I and II respectively. By correlating this latter angle β to the respective spatial orientations of the light beams I, II, the amount of pillar torsion can be readily quantified. The calculations required hereto can of course be simplified considerably, if the said light beams I, II are generated mutually in parallel, i.e. if they occupy/define parallel planes. In this latter case, any deviation of the angle β from zero indicates that the respective transverse element suffers from pillar torsion.

## Claims

1. Method for monitoring the quality of a transverse element (32) produced in or for a drive belt (3) manufacturing process, which comprises the steps of:
- generating a substantially planar beam of light (I), travelling in a direction away from a source (10) thereof towards the element (32) thus illuminating a part of a respective main face (40; 41) of the element (32),
- detecting the reflection (R-I) of the light beam (I) from the said respective main face (40; 41), and
- relating the quality of the transverse element (32) to the intensity, shape or other property of the said reflection (R-I).

2. Method according to claim 1, **characterised in that**, the transverse element (32) is rejected from the drive belt (3) manufacturing process, or at least is selected or marked for rework, if the said quality does not satisfy a predefined criterion.

3. Method according to claim 1 or 2, **characterised in that**, the light beam (I) illuminates the part of a main face (41) that includes a hole (42), which hole (42) is provided in the material of the transverse element (32) for accommodating a stud (39) provided on and extending from the opposite main face (40) of the element (32).

4. Method according to claim 3, **characterised in that**, if a distorted, too little or no reflection (R-I) of the light beam (I) is detected at the location of the hole (42), the respective transverse element (32) is rejected from the drive belt (3) manufacturing process, or at least is selected or marked for rework, in particular a cleaning of the hole (42) thereof.

5. Method according to claim 1 or 2, **characterised in that**, the light beam (I) illuminates the part of a main face (41) that includes a hole (42), which hole (42) is provided in the material of the transverse element (32) for accommodating a stud (39) provided on and extending from the opposite main face (40) of the element (32), **in that** the plane in which the light beam (I) lies is oriented at an acute angle (α-I) with the respectively illuminated part of the said main face (41) and **in that** a perpendicular distance (D) is measured between the reflection (R-I₄₁) of the light beam (I) at a position on the said main face (41).

6. Method according to claim 4, **characterised in that**, if the said perpendicular distance (D) has a value outside a predefined range of allowable values, the respective transverse element (32) is rejected from the drive belt (3) manufacturing process, or at least is selected or marked for rework, in particular of the hole (42) thereof.

7. Method according to one of preceding claims further comprising the steps of:
- generating a further substantially planar beam of light (II), likewise travelling in a direction away from a source (10) thereof towards the element (32) thus also illuminating a part of the respective main face (40; 41) of the element (32), whereby the said beams of light (I, II) are each oriented at an acute angle with the said main face (40, 41) illuminated thereby,
- measuring an angle (β) between the long axes of the oblong reflections (R-I, R-II) of the said beams of light (I, II) from the respective main face (40; 41), and
- relating the quality of the transverse element (32) to such measured angle (β).

8. Method according to claim 7, **characterised in that**, if the said measured angle (β) has a value outside a predefined range of allowable values, the respective transverse element (32) is rejected from the drive belt (3) manufacturing process, or at least is selected or marked for rework, in particular a straightening, i.e. untwisting thereof.

9. Method according to claim 7 or 8, **characterised in that**, the said measured angle (β) is corrected for by the difference between the acute angles of incidence of the said beams of light (I, II).

10. Method according to claim 7, 8 or 9, **characterised in that**, the said beams of light (I, II) lie in mutually parallel planes.

11. Device capable of carrying out the method according to one of the preceding claims, at least incorporating a light source (10), preferably comprising a laser (10) placed behind a slotted mask, for generating at least one planar beam of light (I; II), means for mounting the transverse element (32) such that it is illuminated by the said beam of light (I; II) and means for determining the said reflection (R-I; R-II) of the light beam (I; II) and for subsequently relating the quality of the respective transverse element (32) to the intensity, shape or other property of such of the said reflection (R-1; R-II), preferably these latter means are automated and comprise a camera (11) for generating a digital image of at least the respectively illuminated surface part or parts of the transverse element (32).
